# EUROPEAN PATENT APPLICATION

(11) **EP 2 735 471 A1**
(43) Date of publication of application: **28.05.2014**
(21) Application number: 13193910.0
(22) Date of filing: 21.11.2013
(51) Int. Cl.: B60N 2/225, F16H 1/28

(54) **Seat adjustment device**

(30) Priority: 22.11.2012 JP 2012256065
(71) Applicant: Delta Kogyo Co., Ltd., Aki-gun, Hiroshima (JP)
(72) Inventor: Oki, Yasukazu, Hiroshima (JP)
(74) Representative: Rupprecht, Kay

(57) **Abstract**

Provided is a seat adjustment device which is capable of suppressing wobbling between internal teeth of a plate, and external teeth of planetary gears. The seat adjustment device comprises a holding member (500A) holds at least one (3a) of the planetary gears (3a to 3c) relatively movably in a radial direction, while holding the remaining planetary gears (3b, 3c) relatively non-movably, and a pressing member (8) pressing the holding member (500A) and the at least one planetary gear (3a) relatively movable with respect to the holding member (500A) in respective opposite directions, whereby the at least one planetary gear (3a) and the holding member (500A) are pressed in respective opposite directions along the radial direction by the pressing member (8).

## Description

### TECHNICAL FIELD

The present invention relates to a seat adjustment device for use in a seat such as an automobile seat.

### BACKGROUND ART

As a reclining device used in a seat such as an automobile seat to allow a seat back to be tilted with respect to a seat cushion, there has been known one type which comprises a first plate fixed to the seat back, a second plate fixed to the seat cushion and rotatable with respect to the first plate, and a plurality of planetary gears. In this type of device, each of the first and second plates is provided with a gear section having a plurality of internal teeth. Each of the planetary gears has a plurality of external teeth, and is disposed radially inward of the gear sections of the first and second plates while allowing the external teeth to be meshed with the gear sections. When each of the planetary gears is rotated inward of the gear sections of the first and second plates, the second plate is relatively rotated with respect to the first plate. Therefore, the seat back is tilted with respect to the seat cushion.

In this type of device, a backlash is likely to occur between respective ones of the internal teeth of the gear sections of the first and second plates and the external teeth of the planetary gears. This backlash causes wobbling of the first and second plates. This leads to wobbling of the seat back with respect to the seat cushion.

JP-U 05-001335A discloses a device in which a spring is disposed in contact relation with respective ones of a plurality of planetary gears in order to prevent such wobbling. In this device, the spring directly biases the planetary gears radially outwardly to allow external teeth of the planetary gears to be pressed against internal teeth of respective gear sections of two plates , while holding the planetary gears.

### SUMMARY OF THE INVENTION

### [TECHNICAL PROBLEM]

In the device disclosed in JP-U 05-001335A, there is a problem that is is difficult to sufficiently suppress wobbling between the internal teeth of the plates and the external teeth of the planetary gears.

It is an object of the present invention to provide a seat adjustment device capable of more reliably suppressing wobbling between internal teeth of gear sections of first and second plates and external teeth of a plurality of planetary gears.

### [SOLUTION TO THE TECHNICAL PROBLEM]

In order to solve the above problem, the present invention provides a seat adjustment device comprising: a first plate provided with a first gear section having a plurality of internal teeth; a second plate provided with a second gear section and rotatable with respect to the first plate, wherein the second gear section has a plurality of internal teeth and disposed in concentric relation to the first gear section; a plurality of planetary gears arranged radially inward of the first and second gear sections in side-by-side relation to each other in a circumferential direction of the first and second gear sections, wherein each of the planetary gears having a plurality of external teeth meshable with the internal teeth of the first gear section and the internal teeth of the second gear section; a holding member holding the planetary gears; and a pressing member, wherein: the holding member holds at least one of the planetary gears relatively movably with respect to the holding member in a radial direction of the first and second gear sections, while holding the one or more remaining planetary gears relatively non-movably with respect to the holding member in the radial direction of the first and second gear sections; the at least one planetary gear relatively movable with respect to the holding member and each of the one or more remaining planetary gears relatively non-movable with respect to the holding member are located on respective opposite sides across a plane extending along a rotational central axis of the first and second gear sections; and the pressing member presses the at least one planetary gear relatively movable with respect to the holding member and the holding member, in respective opposite directions along the radial direction of the first and second gear sections, in such a manner as to allow the at least one planetary gear to be moved outwardly in the radial direction of the first and second gear sections.

In this seat adjustment device, the pressing member presses the at least one planetary gear held relatively movably in the radial direction of the first and second gear sections, radially outwardly. Thus, the at least one planetary gear is moved radially outwardly, so that the external teeth of the at least one planetary gear can be pressed against the internal teeth of the first and second gear sections. The pressing member also presses the holding member in a direction opposite to a direction of the movement of the at least one planetary gear. Thus, each of the remaining planetary gears held relatively non-movably with respect to the holding member can also be pressed radially outwardly, so that the external teeth of each of the remaining planetary gears can also be pressed against the internal teeth of the first and second gear sections. This more reliably suppresses wobbling between the internal teeth of the first and second gear sections of the first and second plates, and the external teeth of each of the planetary gears.

### BRIEF DESCRIPTION OF THE DRAWINGS

FIG. 1 is a side view of an automobile seat equipped with a reclining device as a seat adjustment device, according to a first embodiment of the present invention.
FIG. 2 is a perspective view of the reclining device in FIG. 1.
FIG. 3 is an exploded perspective view of the reclining device in FIG. 1.
FIG. 4 is a front view of the reclining device in FIG. 1.
FIG. 5 is a sectional view taken along the line V-V in FIG. 4.
FIG. 6 is a sectional view taken along the line VI-VI in FIG. 5.
FIG. 7 is a sectional view taken along the line VII-VII in FIG. 5.
FIG. 8 is a sectional view taken along the line VIII-VIII in FIG. 5.
FIG. 9 is an explanatory diagram of a state in which a sun gear shaft and a holding member are biased in respective opposite directions by a pressing member.
FIG. 10 is a perspective view of a reclining device according to a second embodiment of the present invention.
FIG. 11 is an exploded perspective view of the reclining device in FIG. 10.
FIG. 12 is a front view of the reclining device in FIG. 10.
FIG. 13 is a sectional view taken along the line XIII-XIII in FIG. 12.
FIG. 14 is a sectional view taken along the line XIV-XIV in FIG. 13.
FIG. 15 is a sectional view taken along the line XV-XV in FIG. 13.
FIG. 16 is a sectional view taken along the line XVI-XVI in FIG. 13.
FIG. 17 is a front view of the reclining device in FIG. 10 in a state when a head of a planetary gear shaft of a first planetary gear is not in contact with a protruding segment.
FIG. 18 is a front view of the reclining device in FIG. 10 in a state when the head of the planetary gear shaft of the first planetary gear is rotationally operated to press the protruding segment.
FIG. 19 is an explanatory diagram illustrating planetary gears inside the reclining device in the state in FIG. 18.
FIG. 20 is a front view of a reclining device as a modification of the second embodiment.
FIG. 21 is a sectional view taken along the line XXI-XXI in FIG. 20.
FIG. 22 is a front view of the reclining device according to the modified embodiment in FIG. 20, in a state before an eccentric head of a protruding segment is rotationally operated.
FIG. 23 is a perspective view of a reclining device as another modification of the second embodiment.
FIG. 24 is a front view of the reclining device according to the modified embodiment in FIG. 23.
FIG. 25 is a sectional view taken along the line XXV-XXV in FIG. 24.
FIG. 26 is a front view of the reclining device according to the modified embodiment in FIG. 23, wherein illustration of a clamping spring is omitted.
FIG. 27A is an explanatory view illustrating the reclining device according to the modified embodiment in FIG. 23, in a state when a head of a planetary gear shaft of a first planetary gear is not in contact with a protruding segment.
FIG. 27B is an explanatory view of the reclining device according to the modified embodiment in FIG. 23, in a state when the head of the planetary gear shaft of the first planetary gear is rotationally operated to press the protruding segment.

### DESCRIPTION OF EMBODIMENTS

With reference to the drawings, preferred embodiments of the present invention will now be described in detail. These embodiments will be described based on an example in which a seat adjustment device of the present invention is used in an automobile seat 100, and implemented as an automobile reclining device.

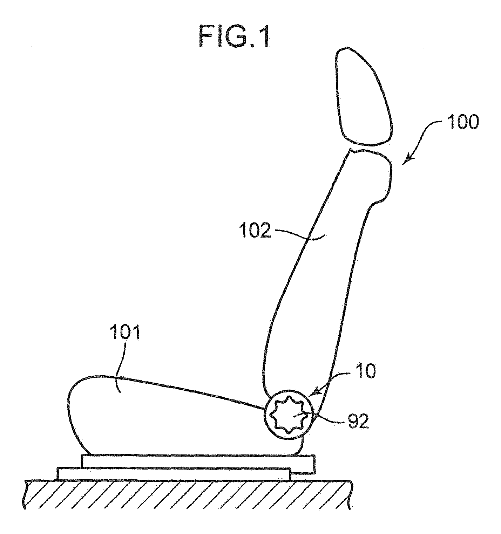

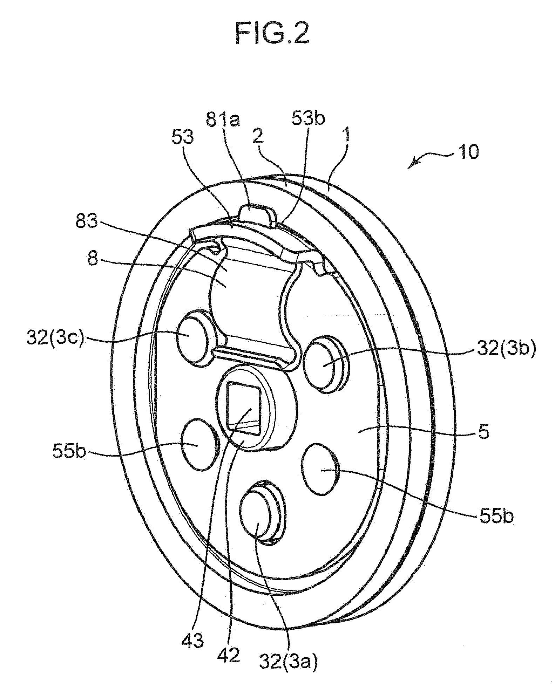

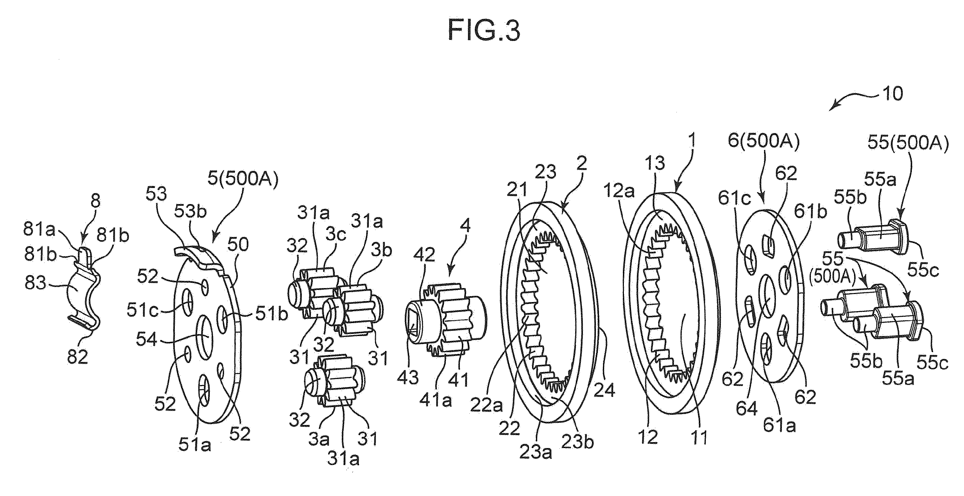

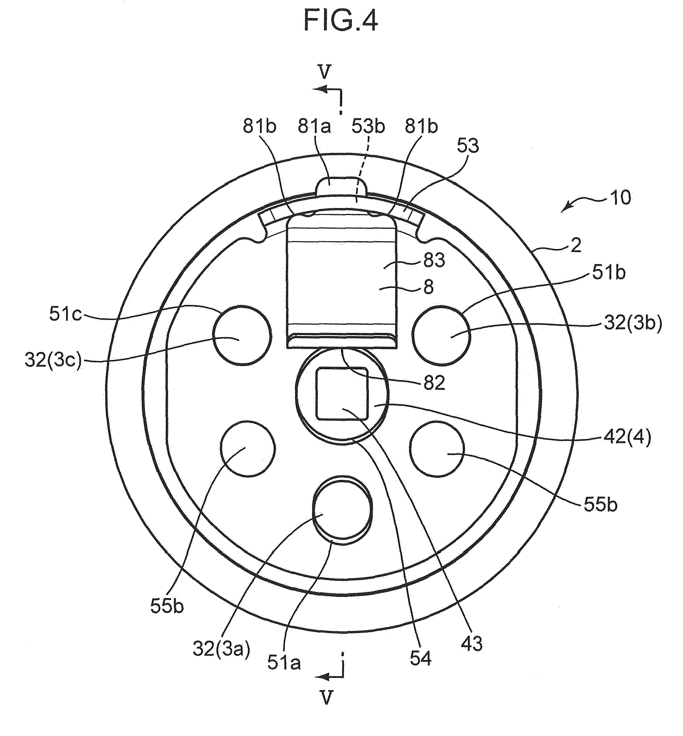

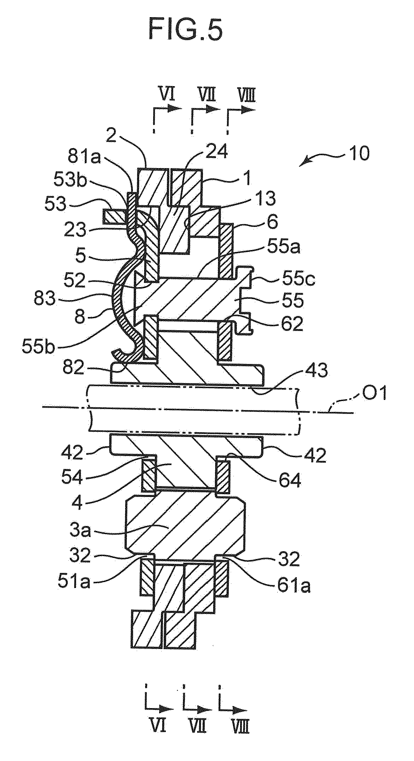

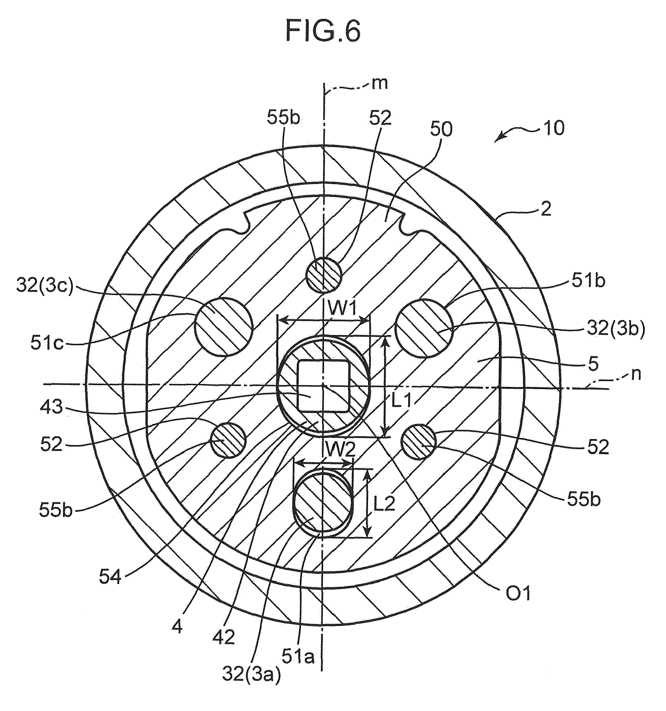

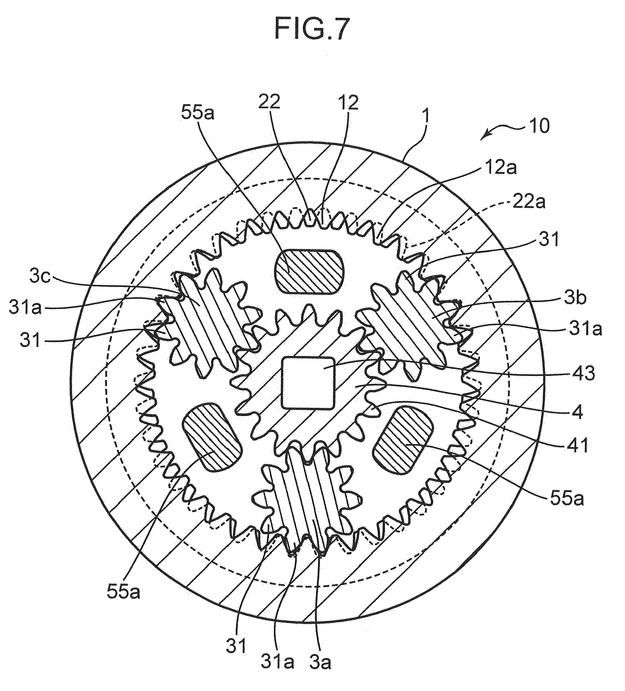

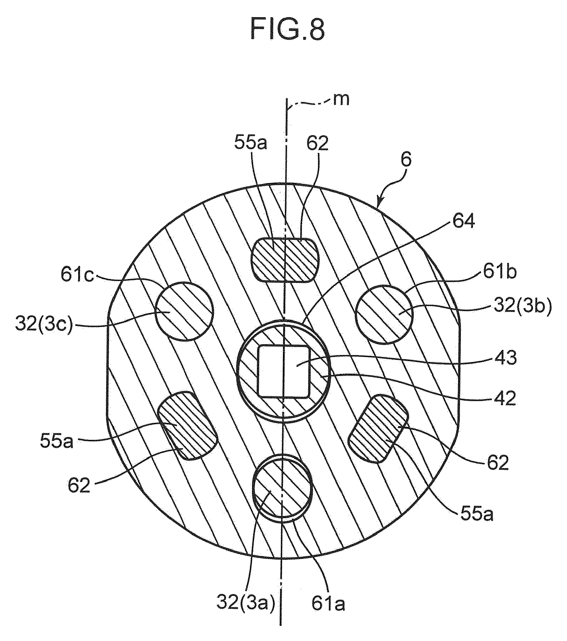

FIG. 1 is a side view of the automobile seat 100 equipped with a reclining device 10 according to a first embodiment of the present invention. FIG. 2 is a perspective view of the reclining device 10 in FIG. 1. FIG. 3 is an exploded perspective view of the reclining device 10 in FIG. 1. FIG. 4 is a front view of the reclining device 10 in FIG. 1. FIG. 5 is a sectional view taken along the line V-V in FIG. 4. FIG. 6 is a sectional view taken along the line VI-VI in FIG. 5. FIG. 7 is a sectional view taken along the line VII-VII in FIG. 5. FIG. 8 is a sectional view taken along the line VIII-VIII in FIG. 5.

As illustrated in FIGS. 2 and 3, the reclining device 10 according to the first embodiment comprises a first plate 1, a second plate 2, three planetary gears 3a to 3c, a sun gear 4, a holding member 500A, and a pressing member 8.

The first plate 1 is a circular plate-shaped member having a hole formed in a central region thereof to penetrate therethrough in a front-rear direction. That is, the first plate 1 is a ring-shaped member having a first-plate hole 11 formed in a central region thereof. The first plate 1 is formed with a first gear section 12 having a plurality of first internal teeth 12a and defining the central region. Specifically, an inner peripheral surface of the first plate 1 defining the first-plate hole 11 has a plurality of first internal teeth 12a provided over the entire circumference thereof to protrude radially inwardly. Respective central axes of the first gear section 12 and the first plate 1 are coincident with each other.

The first plate 1 is rotatable about the central axis O1. In the following description, the central axis O1 of the first plate 1 and the first gear section 12 will be referred to occasionally as "rotational axis O1". Further, a radial direction of a circle having a center on the rotational axis O1, i.e., a radial direction of the first gear section 12 will be referred to simply as "radial direction" or "radially", and a circumferential direction of the circle, i.e., a circumferential direction of the first gear section 12 will be referred to simply as "circumferential direction" or "circumferentially". Furthermore, a direction of the rotational axis O1 will be referred to as "front-rear direction", wherein, in FIG. 3, a side toward the first plate 1 with respect to the second plate 2, and a side toward the second plate 2 with respect to the first plate 1, will be referred to respectively as "rear" or "rear side" and "front" or "front side".

The first plate 1 has a receiving concave portion 13 provided in a radially inward region of a front surface thereof over the entire circumference of the front surface in such a manner as to be concaved rearwardly.

The second plate 2 is a circular plate-shaped member having a hole formed in a central region thereof to penetrate therethrough in the front-rear direction. That is, the second plate is a ring-shaped member having a second-plate hole 21 formed in a central region thereof. The second plate 2 is formed with a second gear section 22 having a plurality of second internal teeth 22a and defining the central region. Specifically, an inner peripheral surface of the second plate 2 defining the second-plate hole 21 has a plurality of second internal teeth 22a provided over the entire circumference thereof to protrude radially inwardly. Respective central axes of the second gear section 22 and the second plate 2 are coincident with each other. The number of the second internal teeth 22a is different from the number of the first internal teeth 12a.

The second plate 2 has a concave portion 23 provided in a radially inward region of a front surface thereof over the entire circumference of the front surface in such a manner as to be concaved rearwardly. Specifically, the second plate 2 has a stepped portion provided in a front surface thereof over its entire circumference, wherein a radially inward region of the front surface of the second plate 2 is located offset rearwardly with respect to a radially outward region thereof. Then, the radially inward region 23b of the front surface of the second plate 2, and an inner peripheral wall 23a extending frontwardly from an outer peripheral edge of the radially inward region 23b, make up the concave portion 23. The inner peripheral wall 23a of the concave portion 23 is a cylindrical surface concentric with a central axis of the central axis of the second gear section 22.

The second plate 2 also has a fitting portion 24 provided in a rear surface of the second plate 2 over its entire circumference to protrude rearwardly.

The first plate 1 and the second plate 2 each configured as above are arranged as follows.

As illustrated in FIG. 5, through an operation of fitting the fitting portion 24 of the second plate 2 into the receiving concave portion 13 of the first plate 1, the first plate 1 and the second plate 2 are disposed in such a manner that respective central axes of the first and second plates 1, 2 become coincident with each other, and, eventually, respective central axes of the first and second gear sections 12, 22 become coincident with each other, to form a common central axis O1. In this state, the first plate 1 is rotatable about the central axis O1 with respect to the second plate 2.

As illustrated in FIG. 3, the sun gear 4 comprises a sun gear shaft 42 and a sun gear body 41. The sun gear shaft 42 is an approximately circular columnar-shaped member having a shaft insertion hole 43 formed thereinside to penetrate therethrough in an axial direction thereof. The shaft insertion hole 43 has a square cross-sectional shape. The sun gear body 41 is provided on an approximately central region of the sun gear shaft 42 in its axial direction. The sun gear body 41 protrudes from an outer peripheral surface of the sun gear shaft 42 over its entire circumference, outwardly in a radial direction of the sun gear shaft 42. The sun gear body 41 has a plurality of external teeth 41a formed on an outer peripheral surface thereof over its entire circumference to protrude outwardly in the radial direction of the sun gear shaft 42. Respective central axes of the sun gear shaft 42 and the sun gear body 41 are coincident with each other.

Each of the planetary gears 3a to 3c has the same configuration. Specifically, each of the planetary gears 3a to 3c comprises a planetary gear shaft 32 and a planetary gear body 31. The planetary gear shaft 32 is a circular columnar-shaped member. The planetary gear body 31 is provided on an approximately central region of the planetary gear shaft 32 in its axial direction. The planetary gear body 31 protrudes from an outer peripheral surface of the planetary gear shaft 32 over its entire circumference, outwardly in a radial direction of the planetary gear shaft 32. The planetary gear body 31 has a plurality of external teeth 31a formed on an outer peripheral surface thereof over its entire circumference to protrude outwardly in the radial direction of the planetary gear shaft 32. Respective central axes of the planetary gear shaft 32 and the planetary gear body 31 are coincident with each other. The shape of the planetary gear shaft 32 is not limited to a circular columnar shape. As used therein, the term "circular columnar shape" includes not only a fully-circular columnar shape but also a shape approximated by a circular columnar shape.

The sun gear 4 and the planetary gears 3a to 3c are arranged with respect to the first and second plates 1, 2, as follows.

As illustrated in FIGS. 5 and 7, the sun gear 4 is disposed in the central regions of the first and second gear sections 12, 22.

As illustrated in FIGS. 5 and 7, each of the planetary gears 3a to 3c is disposed radially inward of the first and second gear sections 12, 22 and radially outward of the sun gear body 41. In this state, the sun gear 4 is disposed in a region surrounded by the planetary gears 3a to 3c, and the external teeth 31a of each of the planetary gears 3a to 3c are meshed with the external teeth 41a of the sun gear body 41. The external teeth 31a of each of the planetary gears 3a to 3c are also meshed with the internal teeth 12a of the first gear section 12 and the internal teeth 22a of the second gear section 22. The planetary gears 3a to 3c are arranged at even intervals, in a circumferential direction of a circle having a center on the rotational axis O1, i.e., in a circumferential direction of the first and second gear sections 12, 22.

The first plate 1 is fixedly attached to a seat back 102 (see FIG. 1) of the seat 100 directly or through a bracket. The second plate 2 is fixedly attached to a seat cushion 101 of the seat 100 directly or through a bracket. A given operation shaft is penetratingly inserted into the shaft insertion hole 43 of the sun gear 4 in a non-rotatable manner. The operation shaft has a manual operation member 92 (illustrated in FIG. 1) engaged with one end thereof in a non-rotatable manner. Thus, when the manual operation member 92 is manually rotated by a user, the sun gear 4 is rotated. Along with this rotation, each of the three planetary gears 3a to 3c meshed with the sun gear 4 is rotaed while being meshed with the first and second gear sections 12, 22. As mentioned above, the first gear section 12 is different from the second gear section 22 in terms of the number of teeth. Thus, when the planetary gears 3a to 3c are rotated, the first gear section 12 is rotated about the rotational axis O1 with respect to the second gear section 22. Along with this rotation, the seat back 102 is tilted with respect to the seat cushion 101.

In the above embodiment, the operation shaft penetratingly inserted into the shaft insertion hole 43 of the sun gear 4 is configured to be rotated by a user's manual operation of the manual operation member 92. Alternatively, the operation shaft may be configured to be rotationally operated by a motor.

A holding structure for the planetary gears 3a to 3c will be described below.

The planetary gears 3a to 3c are held by the holding member 500A. As illustrated in FIGS. 3 and 5, the holding member 500A comprises: a first holding member 5 and a second holding member 6 for restricting the sun gear 4 and the planetary gears 3a to 3c from dropping out in the front-rear direction; and a plurality of (in this embodiment, three) coupling members 55 for non-rotatably coupling the first and second holding members 5, 6 together. The first holding member 5 is disposed frontward of the planetary gear body 31 and the sun gear body 41. The second holding member 6 is disposed rearward of the gear bodies 31, 41

A configuration of the first holding member 5 will be described.

The first holding member 5 has a plate-shaped holding member body 50, and a biasing member locking portion 53.

Firstly, a specific configuration of holding member body 50 will be described below. The holding member body 50 is formed with four holes penetrating therethrough in the front-rear direction, and installed within the concave portion 23 of the second plate 2, in a posture where it extends in a direction perpendicular to the rotational axis O1, while holding a front portion of the sun gear shaft 42 of the sun gear 4 and three front portions of the planetary gear shafts 32 of the planetary gears 3a to 3c each penetratingly inserted into a respective one of the four holes.

Specifically, as illustrated in FIG. 6, the holding member body 50 has a sun gear shaft holding hole (a sun gear shaft holding portion) 54 provided in a central region thereof to allow the front portion of the sun gear shaft 42 to be penetratingly inserted thereinto. The sun gear shaft holding hole 54 has a inner diameter less than an outer diameter of the sun gear body 41. Thus, in a state in which the front portion of the sun gear shaft 42 is penetratingly inserted into the sun gear shaft holding hole 54, the holding member body 50 restricts the sun gear 4 from dropping out frontwardly.

The sun gear shaft holding hole 54 is an approximately elliptical-shaped elongate hole. A hole length W1 of the sun gear shaft holding hole 54 in one direction (a right-left direction in FIG. 6) is approximately equal to an outer diameter of the sun gear shaft 42, and a hole length L1 of the sun gear shaft holding hole 54 in a direction perpendicular to the one direction (an up-down direction in FIG. 6) is greater than the outer diameter of the sun gear shaft 42.

The holding member body 50 also has three planetary gear shaft holding holes (planetary gear shaft holding portions) 51a, 51b, 51c each allowing the front portion of a respective one of the planetary gear shafts 32 to be penetratingly inserted thereinto.

Each of the planetary gear shaft holding holes 51a to 51c has an inner diameter is less than an outer diameter of the planetary gear body 31. Thus, in a state in which each of the front portions of the planetary gear shafts 32 is penetratingly inserted into a respective one of the planetary gear shaft holding holes 51a to 51c, the holding member body 50 restricts the planetary gears 3a to 3c from dropping out frontwardly.

Among the three, first to third planetary gear shaft holding holes 51a to 51c, the first planetary gear shaft holding hole 51a is a radially-extending, approximately elliptical-shaped elongate hole. A circumferential hole length W2 of the first planetary gear shaft holding hole 51a is approximately equal to an outer diameter of the planetary gear shaft 32, and a radial hole length L2 of the first planetary gear shaft holding hole 51a is greater than the outer diameter of the planetary gear shaft 32. Respective long axes of the first planetary gear shaft holding hole 51a and the sun gear shaft holding hole 54 are located on the same straight line extending radially through the rotational axis O1 (a straight line m extending in an up-down direction while passing through the rotational axis O1 illustrated in FIG. 6). In the following description, the planetary gear 3a inserted into the first planetary gear shaft holding hole 51a will be referred to occasionally as "first planetary gear 3a".

On the other hand, each of the remaining planetary gear shaft holding holes (the second planetary gear shaft holding hole 51b and the third planetary gear shaft holding hole 51c) is a circular hole having a diameter approximately equal to the outer diameter of the planetary gear shaft 32. In the following description, the planetary gear 3b and the planetary gear 3c each inserted into a respective one of the second planetary gear shaft holding hole 51b and the third planetary gear shaft holding hole 51c will be referred to occasionally as "second planetary gear 3b" and "third planetary gear 3c, respectively.

The planetary gear shaft holding holes 51a to 51c are arranged at even intervals on a circle having a center on the rotational axis O1. Each of the second planetary gear shaft holding hole 51b and the third planetary gear shaft holding hole 51c is arranged on a side opposite to the first planetary gear shaft holding hole 51a across a plane n perpendicular to the long axis m of the sun gear shaft holding hole 54 , the plane n is extending along the rotational axis O1. According to this arrangement, each of the second and third planetary gears 3b, 3c is arranged on a side opposite to the first planetary gear 3a across the plane n perpendicular to the long axis m of the sun gear shaft holding hole 54 extending along the rotational axis O1. The planetary gears 3a to 3c are arranged at even intervals, in a circumferential direction of a circle having a center on the rotational axis O1, i.e., in a circumferential direction of the first and second gear sections 12, 22.

The holding member body 50 further has three coupling member insertion holes 52 each penetrating therethrough in the front-rear direction. Each of the coupling member insertion holes 52 is a circular hole, and an aftermentioned crimpable portion 55b of each of the coupling members 55 is penetratingly inserted thereinto. Each of the three coupling member insertion holes 52 is provided between adjacent ones of the planetary gear shaft holding holes.

Next, a specific configuration of the biasing member locking portion 53 will be described below.

As illustrated in FIGS. 3 to 5, the biasing member locking portion 53 is a plate-shaped member protruding frontwardly from a part of an outer peripheral edge of the holding member body 50. The biasing member locking portion 53 is provided on a side opposite to the first planetary gear shaft holding hole 51a with respect to the sun gear shaft holding hole 54, to extend circumferentially symmetrically with respect to a point on the long axis of the sun gear shaft holding hole 54, in front view. The biasing member locking portion 53 and the holding member body 50 are composed of a single plate-shaped member, and formed by bending a part of the plate-shaped member at an approximately right angle with respect to the holding member body 50.

The biasing member locking portion 53 is formed with a biasing member locking hole 53b penetrating between opposite surfaces (a radially inward surface and a radially outward surface thereof. The biasing member locking hole 53b extends circumferentially symmetrically with respect to a point on the long axis of the sun gear shaft holding hole 54, in front view.

A configuration of the second holding member 6 will be described.

As illustrated in FIGS. 3 and 8, the second holding member 6 has approximately the same configuration as that of the holding member body 50 of the first holding member 5.

Specifically, the second holding member 6 is a plate-shaped member. The second holding member 6 has a sun gear shaft holding hole(a sun gear shaft holding portion) 64 having the same configuration as that of the sun gear shaft holding hole 54 of the holding member body 50. That is, the sun gear shaft holding hole 64 has an inner diameter less than the outer diameter of the sun gear body 41. Thus, in a state in which a rear portion of the sun gear shaft 42 is penetratingly inserted in the sun gear shaft holding hole 64, the second holding member 6 restricts the sun gear 4 from dropping out rearwardly. Further, the sun gear shaft holding hole 64 of the second holding member 6 has a radially-extending, approximately elliptical shape, wherein a hole length of the sun gear shaft holding hole 64 in its longitudinal direction is greater than the outer diameter of the sun gear shaft 42, and a hole length of the sun gear shaft holding hole 64 in a direction perpendicular to the longitudinal direction is approximately the same as the outer diameter of the sun gear shaft 42.

The second holding member 6 is formed with three planetary gear shaft holding holes(planetary gear shaft holding portions) 61a to 61c each having the same configuration as that of a respective one of the planetary gear shaft holding holes 51a to 51c of the holding member body 50.

Specifically, the second holding member 6 has a first planetary gear shaft holding hole 61a which is a radially-extending, approximately elliptical hole having a long axis on the same straight line as the long axis of the sun gear shaft holding hole 54, wherein a radial hole length of the first planetary gear shaft holding hole 61a is greater than the outer diameter of the planetary gear shaft 32, and a circumferential hole length of the first planetary gear shaft holding hole 61a is approximately equal to the outer diameter of the planetary gear shaft 32. The same planetary gear 3a is penetratingly inserted into each of the first planetary gear shaft holding holes 51a, 61a. The second holding member 6 also has second and third planetary gear shaft holding holes 61b, 61c each consists of a circular hole having an inner diameter approximately equal to the outer diameter of the planetary gear shaft 32. Each of the planetary gear shaft holding holes 61a to 61c has a inner diameter less than the outer diameter of the planetary gear body 31, so that, in a state in which a rear portion of the planetary gear shaft 32 of each of the planetary gears 3a to 3c is penetratingly inserted in a respective one of the planetary gear shaft holding holes 61a to 61c, the second holding member 6 restricts the planetary gears 3a to 3c from dropping out rearwardly.

The second holding member 6 further has three coupling member insertion holes 62 each penetrating therethrough in the front-rear direction. An aftermentioned shaft portion 55a of each of the coupling members 55 is penetratingly inserted into a respective one of the coupling member insertion holes 62. Each of the coupling member insertion hole 62 has a hole shape corresponding to the shaft portion 55a. Differently from the coupling member insertion holes 52 of the holding member body 50, it is an approximately rectangular elongate hole in which a circumferential hole length is greater than a radial hole length.

A configuration of the coupling members 55 will be described below.

Each of the coupling members 55 has the same configuration. Each of the coupling members 55 has a shaft portion 55a extending in a given direction, a circular columnar-shaped crimpable portion 55b protruding axially outwardly from one of axially opposite ends of the shaft portion 55a, and a head 55c provided at the other end of the shaft portion 55a. As mentioned above, each of the crimpable portions 55b of the coupling members 55 is fittingly inserted into a respective one of the coupling member insertion hole 52 of the first holding member 5, and each of the shaft portions 55a of the coupling members 55 is fittingly inserted into a respective one of the coupling member insertion hole 62 of the second holding member 6.

The above components are assembled as the holding member 500A as illustrated in FIG. 5. Specifically, the sun gear shaft 42, the planetary gear shafts 32 and the crimpable portions 55b and the shaft portions 55a of the coupling members 55 are penetratingly inserted, respectively, into the holes of the first and second holding members 5, 6, and then front ends of the crimpable portions 55b protruding frontwardly from the respective coupling member holding holes 52 of the first holding member 5 are subjected to crimping, thereby holding the sun gear 4 and the planetary gears 3a to 3c non-movably in the front-rear direction. In this connection, as mentioned above, the hole length W1 of each of the sun gear shaft holding holes 54, 64 in one direction (the right-left direction in FIG. 6) is approximately equal to the outer diameter of the sun gear shaft 42, and the hole length L1 of each of the sun gear shaft holding holes 54, 64 in a direction perpendicular to the one direction (the direction of the long axis m) is greater than the outer diameter of the sun gear shaft 42. Therefore, in each of the sun gear shaft holding holes 54, 64, the sun gear 4 is held non-movably in a direction perpendicular to the long axis m of the sun gear shaft holding holes 54, while being allowed to be moved in the direction of the long axis m and rotated about the axis of the sun gear shaft 42.

Further, as mentioned above, each of the first planetary gear shaft holding holes 51a, 61a has the circumferential hole length W2 set to become approximately equal to the outer diameter of the planetary gear shaft 32, and the long axis m-wise hole length L2 set to become greater than the outer diameter of the planetary gear shaft 32. Therefore, the planetary gear shaft 32 of the first planetary gear 3 inserted in corresponding ones of the first planetary gear shaft holding holes 51a, 61a is held non-movably in the circumferential direction relatively with respect to the holding member 500A, while being allowed to be rotated about the axis of the planetary gear shaft 32, and moved radially (in the direction of the long axis m)relatively with respect to the holding member 500A. Therefore, the first planetary gear 3 is held non-movably in the circumferential direction relatively with respect to the holding member 500A, while being allowed to be moved radially relatively with respect to the holding member 500A

Further, as mentioned above, each of the second planetary gear shaft holding holes 51b, 61b, and the third planetary gear shaft holding holes 51c, 61c is a circular hole having an inner diameter approximately equal to the outer diameter of the planetary gear shaft 32. Therefore, the second and third planetary gear 3b, 3c inserted in corresponding ones of the second and third planetary gear shaft holding holes 51b, 61b, 51c, 61c is held rotatably about corresponding ones of the axis of the planetary gear shaft 32, while being precluded from being moved, i.e., relatively moved with respect to the holding member 500A, circumferentially and radially

Next, the pressing member 8 will be described.

As illustrated in FIGS. 3 to 5, the pressing member 8 comprises a pressing member body 83 and an insertion segment 81a. The pressing member body 83 is a plate spring extending in a given direction. The insertion segment 81a is a plate-shaped member which protrudes from a central region of one of longitudinally opposed edges of the pressing member body 83 outwardly in a longitudinal direction thereof. The pressing member body 83 and the insertion segment 81a are formed from a single plate-shaped member.

As illustrated in FIGS. 4 and 5, the pressing member 8 is disposed on a front side of the first holding member body 50. The insertion segment 81a provided on one end of the pressing member 8 is fittingly inserted in the biasing member locking hole 53b of the first holding member 5, and the other end 82 to be in contact with the outer peripheral surface of the sun gear shaft 42. The pressing member body 83 extends from the outer peripheral surface of the sun gear shaft 42, along the direction of the long axis m of the sun gear shaft holding hole 54. The end of the pressing member body 83 provided with the insertion segment 81a has a circumferential length greater than a circumferential hole length of the biasing member locking hole 53b, and a portion 81b of the end of the pressing member body 83 located circumferentially outward of the insertion segment 81a is in contact with a radially inward surface of the biasing member locking portion 53.

The pressing member body 83 has an S shape in side view.

More specifically, a longitudinally central region of the pressing member body 83 is formed in an arc shape protruding frontwardly with a given curvature radius.The end 82 of the pressing member body 83 in contact with the sun gear shaft 42 is curved to protrude toward the sun gear shaft 42 so as to reduce a frictional resistance during rotation of the sun gear shaft 42.

The pressing member 8 configured as above is disposed on the front side of the holding member body 50, while being bent to cause the curvature radius of the pressing member body 83 to become smaller, i.e., while being compressed in the direction of the long axis m of the sun gear shaft holding hole 54, when the external force is applied. Thus, when the external force is removed after installation thereof, the pressing member body 83 is urged, according to an elastic reaction force, to be expanded toward a side causing an increase in the curvature radius, i.e., in the direction of the long axis m, thereby applying an opposite force in the direction of the long axis m to the sun gear 4 and the biasing member locking portion 53 in contact with respective ones of the opposite ends of the pressing member body 83, in respective opposite directions along the long axis m.

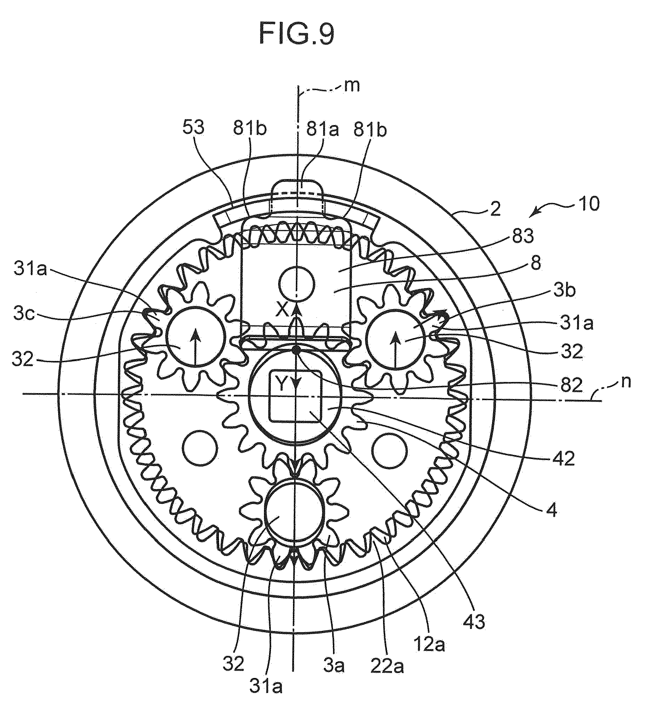

As mentioned above, the sun gear 4 is held relatively movably with respect to the holding member 500A in the direction of the long axis m. Thus, as illustrated in FIG. 9, when the elastic reaction force is applied from the pressing member body 83 to the sun gear 4, the sun gear 4 is moved toward a side opposite to the biasing member locking portion 53 in the direction of the long axis m (in the direction Y) to press the first planetary gear 3a radially outwardly. As mentioned above, the first planetary gear 3a is held relatively movably with respect to the holding member 500A radially. Thus, when pressed by the sun gear 4, the first planetary gear 3a is moved radially outwardly. This allows the external teeth 31a of the first planetary gear 3a to be pressed against the first internal teeth 12a of the first gear sections 12 and the second internal teeth 22a of the second gear sections 22.

On the other hand, each of the second planetary gear 3b and the third planetary gear 3c is held relatively non-movably with respect to the holding member 500A, as mentioned above. Further, each of the second and third planetary gears 3b, 3c is disposed on a side opposite to the first planetary gear 3a with respect to the plane n perpendicular to the long axis m, i.e., on the side of the biasing member locking portion 53 with respect to the plane n. Thus, as illustrated in FIG. 9, when the elastic reaction force is applied from the pressing member body 83 to the biasing member locking portion 53, the first holding member 5 including the biasing member locking portion 53 is moved in a direction (direction X in FIG. 9) opposite to the direction (direction Y) of the movement of the first planetary gear 3a and the second holding member 6 , the second planetary gear 3b and the third planetary gear 3c relatively non-movable with respect to the first holding member 5, , are moved in a direction (direction X in FIG. 9) opposite to the direction (direction Y) of the movement of the first planetary gear 3a. This allows the external teeth 31a of the second and third planetary gears 3b, 3c to be also pressed against the first internal teeth 12a of the first gear sections 12 and the second internal teeth 22a of the second gear sections 22.

As above, in the reclining device 10 according to the first embodiment, the external teeth 31a of the planetary gears 3a, 3b, 3c are pressed against the first internal teeth 12a of the first gear sections 12 and the second internal teeth 22a of the second gear sections 22. This makes it possible to suppress wobbling of the planetary gears 3a to 3c and the first and second gear sections 12, 22 due to backlash therebetween, thereby suppressing wobbling of the seat back 102 with respect to the seat cushion 101.

Next, a reclining device 200 according to a second embodiment of the present invention will be described.

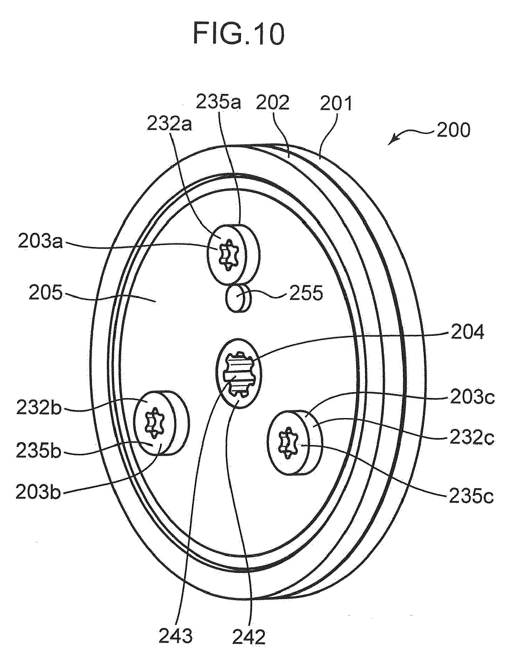

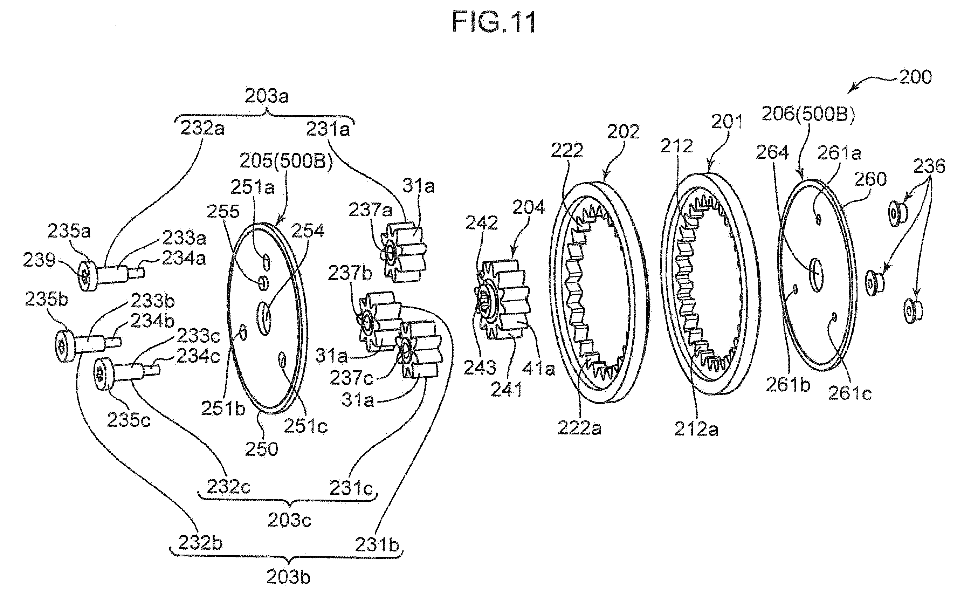

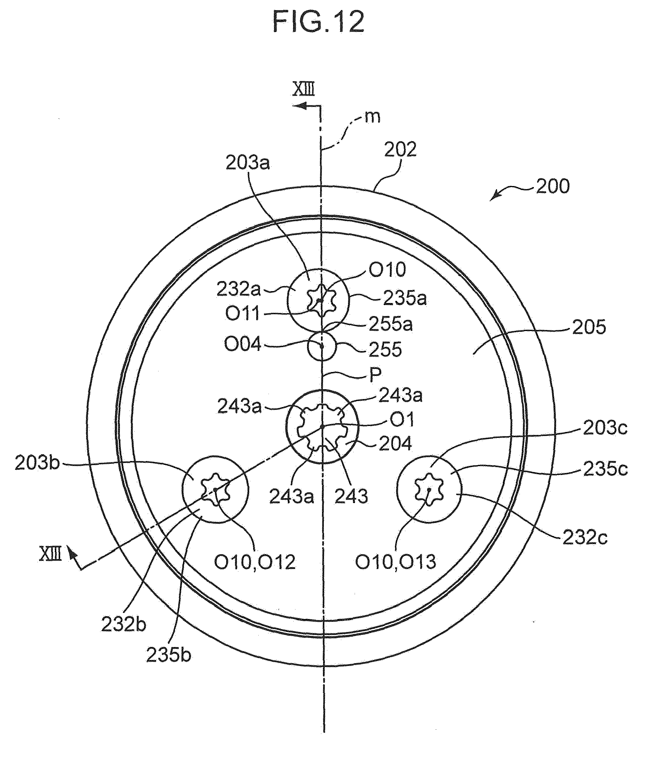

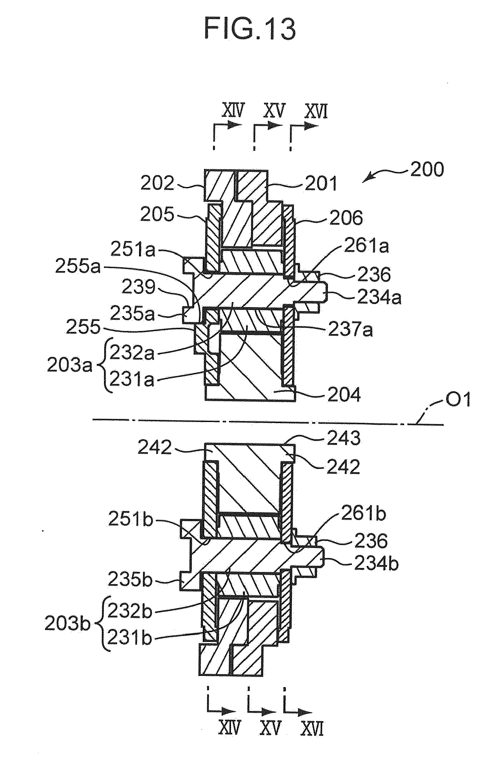

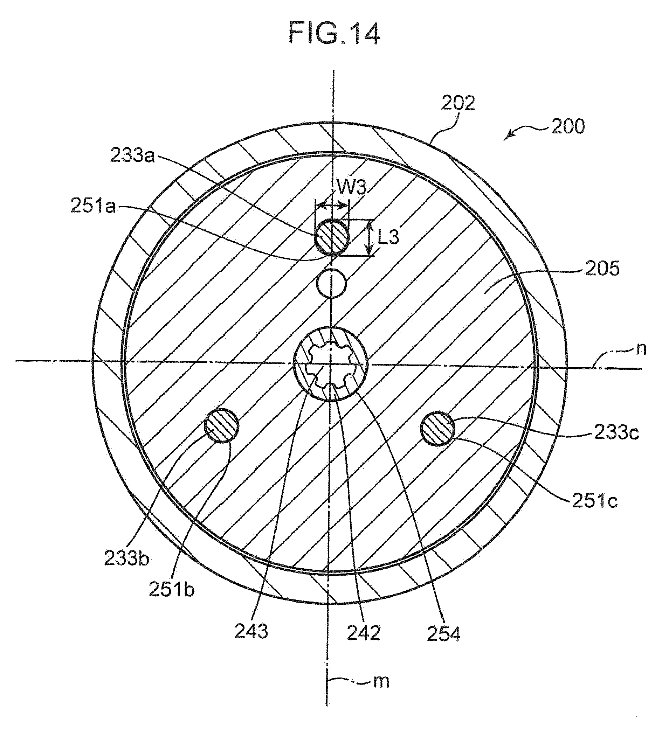

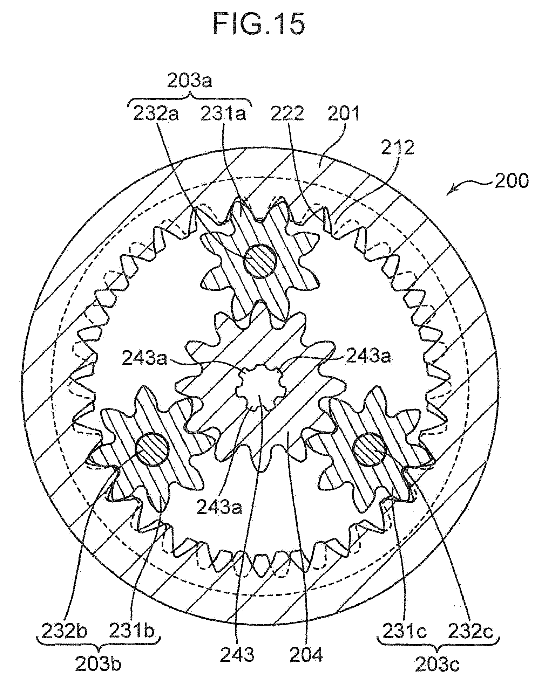

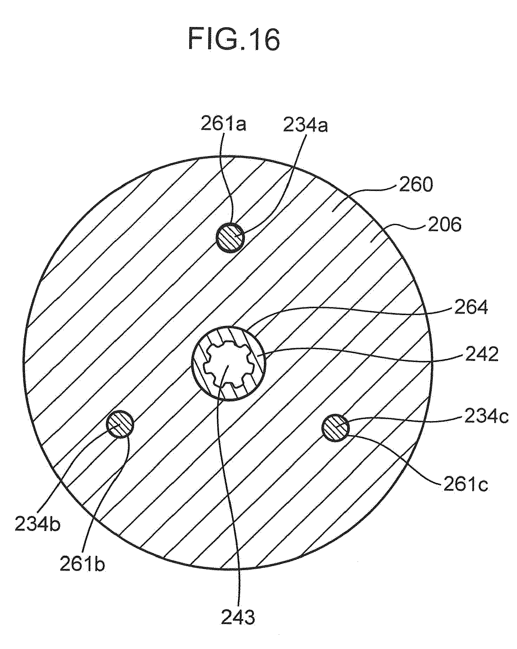

FIG. 10 is a perspective view of the reclining device 200. FIG. 11 is an exploded perspective view of the reclining device 200. FIG. 12 is a front view of the reclining device 200. FIG. 13 is a sectional view taken along the line XIII-XIII in FIG. 12. FIG. 14 is a sectional view taken along the line XIV-XIV in FIG. 13. FIG. 15 is a sectional view taken along the line XV-XV in FIG. 13. FIG. 16 is a sectional view taken along the line XVI-XVI in FIG. 13.

As illustrated in FIGS. 10 and 11, the reclining device 200 comprises: a first plate 201 configured to be rotated about a rotational axis O1 (see FIG. 12, etc.) and formed with a first gear section 212; a second plate 202 formed with a second gear section 222; three planetary gears (a first planetary gear 203a, a second planetary gear 203b and a third planetary gear 203c); a sun gear 204, and a holding member 500B, as with the first embodiment. On the other hand, differently from the first embodiment, the reclining device 200 according to the second embodiment has a protruding segment 255 as the pressing member. Further, differently from the first embodiment, the reclining device 200 according to the second embodiment has three locking members 236.

Each of the first plate 201 and the second plate 202 has the same configuration of a respective one of the first plate 1 and the second plate 2 in the first embodiment, and their description will be omitted.

The planetary gears 203a to 203c will be described.

As illustrated in FIG. 11, each of the planetary gears 203a to 203c comprises a planetary gear body (231a to 231c) having a plurality of external teeth 31a on an outer periphery thereof, and a planetary gear shaft (232a to 232c) extending in a given direction and rotatably supporting the planetary gear body (231a to 231c). Each of the planetary gear bodies 231a to 231c is a separate component from a respective one of the planetary gear shafts 232a to 232c.

Each of the planetary gear bodies 231a to 231c has a gear shaft insertion hole (237a to 237c) formed in a central region thereof. A central axis of each of the planetary gear bodies 231a to 231c is coincident with a central axis of a respective one of the gear shaft insertion holes 237a to 237c.

Each of the planetary gear shafts 232a to 232c comprises a circular columnar-shaped support shaft (233a to 233c), a locking member coupling portion (234a to 234c) provided one of axially opposite ends of the support shaft (233a to 233c), and a head (235a to 235c) provided on the other end.

Each of the locking member coupling portions 234a to 234c is a circular columnar-shaped portion having an outer diameter less than an outer diameter of a respective one of the support shafts 233a to 233c. A central axis of each of the locking member coupling portions 234a to 234c is coincident with a central axis of a respective one of the support shafts 233a to 233c.

Each of the heads 235a to 235c is a circular columnar-shaped portion having an outer diameter greater than an outer diameter of a respective one of the support shafts 233a to 233c. Each of the heads 235a to 235c has an end face formed with a tool engagement recess 239 concaved inwardly.

As illustrated in FIG. 12, in the second and third planetary gears 203b, 203c, central axes O12, O13 of the heads 235b, 235c are coincident, respectively, with central axes O10 of the support shafts 233b, 233c. On the other hand, in the first planetary gear 203a, a central axis O11 of the head 235a is not coincident with a central axis O10 of the support shaft 233a. That is, in the first planetary gear 203a, the head 235a and the support shaft 233a are eccentrically arranged, and a distance between an outer peripheral edge of the head 235a and the central axis O10 of the support shaft 233a gradually increases and then gradually decreases, along the circumferential direction. As described later, the planetary gear shaft 232a of the first planetary gear 203a is rotatable about the central axis O10 of the support shaft 233a. In the second embodiment, a portion of the outer peripheral edge of the head 235a where a distance from the central axis O10 of the support shaft 233a, i.e., the rotational axis O10 of the planetary gear shafts 232a and the head 235a gradually increases along the circumferential direction functions as a diametrally enlarged portion contactable with the protruding segment 255.

The sun gear 204 will be described below.

The sun gear 204 has approximately the same configuration as the sun gear 4 in the first embodiment. The sun gear 204 comprises a sun gear body 241 having a plurality of external teeth 41a, and a circular columnar-shaped sun gear shaft 242. However, in the second embodiment, as illustrated in FIG. 15, a plurality of concave grooved 243a are formed in an inner peripheral surface of a shaft insertion hole 243 the sun gear shaft 242, i.e., the shaft insertion hole 243 has a non-circular cross-section.

The holding member 500B will be described below.

As illustrated in FIG. 11, the holding member 500B comprises a first holding member 205 disposed frontward of the planetary gear bodies 231a to 231c of the planetary gears 203a to 203c, and the second holding member 206 disposed rearward of the planetary gear bodies 231a to 231c. Differently from the first embodiment, the holding member 500B in the second embodiment does not have the coupling members. Thus, differently from the first embodiment, each of the first holding member 205 and the second holding member 206 does not have any hole for insertion of the coupling members. In the second embodiment, the planetary gear shafts 232a to 232c and the locking members 236 fulfill the same function in the first embodiment.

The first holding member 205 will be described below.

The first holding member 205 consists of a disc-shaped holding member body 250.

The holding member body 250 has one sun gear shaft holding hole 254, and three planetary gear shaft holding holes (planetary gear insertion portions: a first planetary gear shaft holding hole 251a, a second planetary gear shaft holding hole 251b and a third planetary gear shaft holding hole 251c).

The sun gear shaft 242 is penetratingly inserted into the sun gear shaft holding hole 254. As illustrated in FIG. 14, the sun gear shaft holding hole 254 is a circular hole whose inner diameter is approximately equal to an outer diameter of the sun gear shaft 242, and less than an outer diameter of the sun gear body 241.

Each of the support shafts 233a to 233c of the planetary gears 203a to 203c is penetratingly inserted into a respective one of the planetary gear shaft holding holes 251a to 251c.

As illustrated in FIG. 14, among the planetary gear shaft holding holes 251a to 251c, each of the second planetary gear shaft holding hole 251b for insertion of the support shaft 233b of the second planetary gear 203b, and the third planetary gear shaft holding hole 251c for insertion of the support shaft 233c of the third planetary gear 203c, is a circular hole whose inner diameter is approximately equal to an outer diameter of each of the support shafts 233b, 233c.

On the other hand, the first planetary gear shaft holding hole 251a for insertion of the support shaft 233a of the first planetary gear 203a in which the head 235a and the support shaft 233a are eccentrically arranged, is a radially-extending elongate hole. More specifically, as illustrated in FIG. 14, a circumferential hole length W3 of the first planetary gear shaft holding hole 251a is approximately equal to an outer diameter of the support shaft 233a of the first planetary gear 203a, and a radial hole length L3 of the first planetary gear shaft holding hole 251a is greater than the outer diameter of the support shaft 233a.

The planetary gear shaft holding holes 251a to 251c are arranged on a circle having a center on the rotational axis O1 at even intervals. Each of the second planetary gear shaft holding hole 251b and the third planetary gear shaft holding hole 251c is disposed on a side opposite to the first planetary gear shaft holding hole 251a across a plane n perpendicular to a radially-extending long axis m of the first planetary gear shaft holding hole 251a. According to this arrangement, the second planetary gear 203b and the third planetary gear 203c are arranged at respective positions on a side opposite to the first planetary gear 203a across the plane n.

As illustrated in FIG. 10, the protruding segment (pressing member) 255 protrudes frontwardly from a front surface of the holding member body 250. The protruding segment 255 has a circular columnar shape. The protruding segment 255 is located between the first planetary gear shaft holding hole 251a and the sun gear shaft holding hole 254. As illustrated in FIG. 12, a central axis 004 of the protruding segment 255 is located on the radially-extending long axis of the first planetary gear shaft holding hole 251a, in front view.

The second holding member 206 will be described below.

As illustrated in FIGS. 11 and 16, the second holding member 206 consists of a disc-shaped holding member body 260. The holding member body 260 has one sun gear shaft holding hole 264, and three planetary gear shaft holding holes (planetary gear insertion portions) 261a, 261b, 261c.

The sun gear shaft holding hole 264 has the same configuration as that of the sun gear shaft holding hole 254 of the first holding member 205, and its description will be omitted here.

The locking member coupling portion 234a to 234c of the planetary gears 203a to 203c are penetratingly inserted, respectively, into the planetary gear shaft holding holes 261a to 261c.

As illustrated in FIG. 16, among the planetary gear shaft holding holes 261a to 261c, each of the second planetary gear shaft holding hole 261b for insertion of the locking member coupling portion 234b of the second planetary gear 203b, and the third planetary gear shaft holding hole 261c for insertion of the locking member coupling portion 234c of the third planetary gear 203c, is a circular hole whose inner diameter is approximately equal to an outer diameter of each of the locking member coupling portions 234b, 334c.

On the other hand, the first planetary gear shaft holding hole 261a for insertion of the locking member coupling portion 234a of the first planetary gear 203a, in which the head 235a and the support shaft 233a are eccentrically arranged, is a radially-extending elongate hole. More specifically, as illustrated in FIG. 16, a circumferential hole length of the first planetary gear shaft holding hole 261a is approximately equal to an outer diameter of the locking member coupling portion 234a of the first planetary gear 203a, and a radial hole length of the first planetary gear shaft holding hole 261a is greater than the outer diameter of the locking member coupling portion 234a of the first planetary gear 203a.

The reclining device 200 configured as above is assembled in the following manner.

First of all, the sun gear 204 and the planetary gear bodies 231a to 231c of the planetary gears 203a to 203c are disposed at positions radially inward of the first gear section 212 and the second gear section 222. Then, the first holding member 205 is disposed frontward of the planetary gear bodies 231a to 231c, and the second holding member 206 is disposed rearward of the planetary gear bodies 231a to 231c. During this operation, the sun gear shaft 242 is penetratingly inserted into the sun gear shaft holding holes 254, 264 of the first and second holding members 205, 206. As mentioned above, the inner diameter of each of the sun gear shaft holding holes 254, 264 is approximately equal to the outer diameter of the sun gear shaft 242. Thus, the sun gear shaft 242 is held by the sun gear shaft holding holes 254, 264, rotatably about a central axis thereof, while being precluded from being moved, i.e., relatively moved with respect to the holding member 500B, radially and circumferentially. Further, the inner diameter of each of the sun gear shaft holding holes 254, 264 is less than the outer diameter of the sun gear body 241. Thus, the holding members 205, 206 restrict the sun gear 204 from dropping out in the front-rear direction.

Then, the planetary gear shafts 232a to 232c are penetratingly inserted, respectively, into three sets of the planetary gear shaft holding holes 251a to 252c of the first holding member 205, and the planetary gear shaft holding holes 261a to 261c of the second holding member 206, rearwardly from a position frontward of the first holding member 205. In this operation, each of the locking member coupling portions 234a to 234c of the planetary gear shafts 232a to 232c is penetratingly inserted into a respective one of the planetary gear shaft holding holes 261a to 261c of the second holding member 206, and the support shafts 233a to 233c are penetratingly inserted, respectively, into the planetary gear shaft holding holes 251a to 251c of the first holding member 205.

Subsequently, the locking members 236 are fitted, respectively, onto the locking member coupling portions 234a to 234c of the planetary gear shafts 232a to 232c, thereby restricting drop-off of the planetary gear shafts 232a to 232c in the front-rear direction. Based on this restriction, the first holding member 205 and the second holding member 206 are coupled together while holding the planetary gears 203a to 203c and the sun gear 204 therebetween.

As mentioned above, the inner diameter of each of the second and third planetary gear shaft holding holes 251b, 251c of the first holding member 205 is approximately equal to the outer diameter of a respective one of the support shafts 233b, 233c of the second and third planetary gears 203b, 203c to be penetratingly inserted thereinto. Further, the inner diameter of each of the second and third planetary gear shaft holding holes 261b, 261c of the second holding member 206 is approximately equal to the outer diameter of a respective one of the locking member coupling portions 234b, 234c of the second and third planetary gears 203b, 203c to be penetratingly inserted thereinto. Thus, each of the planetary gear shafts 232b, 232c of the second and third planetary gears 203b, 203c is held by the planetary gear shaft holding holes 251b, 252c, rotatably about the central axis O10 thereof, while being precluded from being moved circumferentially and radially. Then, the holding member 500B holds each of the second planetary gear 203b and the third planetary gear 203c relatively non-movably with respect thereto, circumferentially and radially.

On the other hand, as mentioned above, each of the first planetary gear shaft holding hole 251a of the first holding member 205 and the planetary gear shaft holding holes 261a of the second holding member 206 for insertion of the support shaft 233a of the first planetary gear 203a in which the head 235a and the support shaft 233a are eccentrically arranged, is a radially-extending elongate hole. Further, the circumferential hole length of each of the first planetary gear shaft holding holes 251a, 261a is approximately equal to the outer diameter of a respective one of the support shaft 233a and the locking member coupling portion 234a to be penetratingly inserted thereinto, and the radial hole length of each of the first planetary gear shaft holding holes 251a, 261a is greater than the outer diameter of a respective one of the support shaft 233 and the locking member coupling portion 234a. Thus, the planetary gear shaft 232a of the first planetary gear 203a is held by the first planetary gear shaft holding holes 251a, 261a, rotatably about the central axis O10 of the support shaft 233a, and movably radially, while being precluded from being moved circumferentially. Then, the holding member 500B holds the first planetary gear 203a relatively movably with respect thereto, radially. More specifically, the first planetary gear 203a is disposed to allow the central axis O10 of the support shaft 233a to be located on the long axis m of each of the first planetary gear shaft holding holes 251a, and held relatively movably with respect to the holding member 500B along the long axis m. Further, as illustrated in FIG. 12, the planetary gear shaft 232a of the first planetary gear 203a is held rotatably about the central axis O10 at a position where the head 235a thereof is located radially outward of the protruding segment 255.

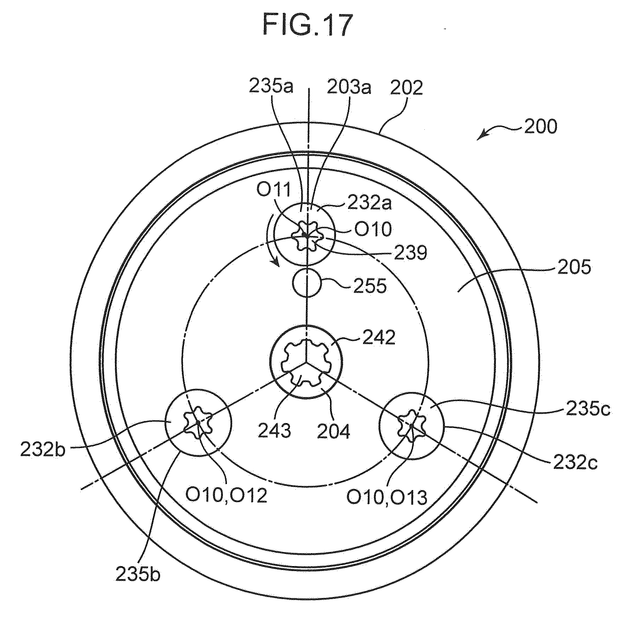

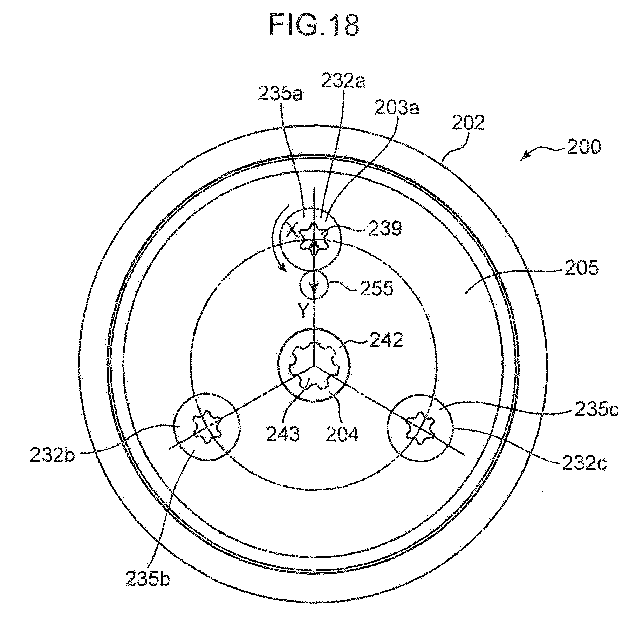

In this connection, the reclining device 200 is configured such that, according to rotation of the planetary gear shaft 232a about the central axis O10, a relative position between the protruding segment 255 and the planetary gear shaft 232a of the first planetary gear 203a is changed between a state in which the head 235a and the protruding segment 255 are in spaced-apart relation to each other and a state in which the outer peripheral edge of the head 235a and the protruding segment 255 are in contact with each other, and the contact state is maintained in a given rotational range. More specifically, a distance between the central axis O10 of the planetary gear shaft 232a and the protruding segment 255, i.e., the shortest distance between the central axis O10 and the protruding segment 255 along the long axis m, is set to become greater than a minimum value of a distance between an outer peripheral edge of the planetary gear shaft 232a and the central axis O10. Thus, in this reclining device 200, as illustrated in FIG. 17, when the planetary gear shaft 232a of the first planetary gear 203a is rotated about the central axis O10 of the support shaft 233a from the state in which the outer peripheral edge of the planetary gear shaft 232a and the protruding segment 255 are in contact with each other, in a given direction (in FIG. 18, in a counter-clockwise direction) by a given amount, the head 235a of the first planetary gear shaft 232a is brought into contact with the protruding segment 255. In this embodiment, the planetary gear shaft 232a is rotationally operated by an engagement tool (not illustrated) configured to be engageably inserted into the tool engagement recess 239 provided in the head 235a.

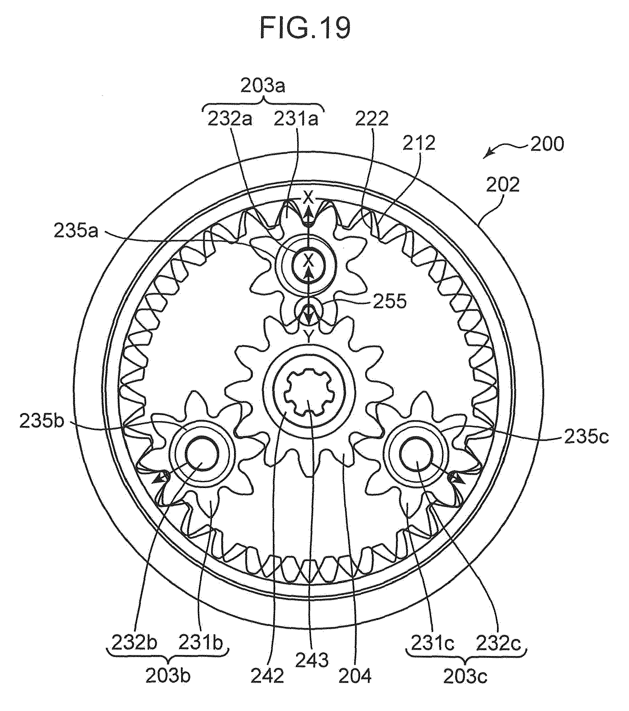

In this connection, as mentioned above, in the first planetary gear 203a, the head 235a and the support shaft 233a are eccentrically arranged. Further, the first planetary gear 203a is held by the first planetary gear shaft holding hole 251a, 261a, relatively movably with respect to the holding member along the long axis m. Thus, when the head 235a is brought into contact with the protruding segment 255 in the above manner, and then the planetary gear shaft 232a of the first planetary gear 203a is further rotationally operated in the given direction, the planetary gear shaft 232a and the protruding segment 255 is relatively moved in a direction causing them to be spaced apart from each other along the long axis m. So that the planetary gear 203a and the holding member 500B is relatively moved in a direction causing them to be spaced apart from each other radially. More specifically, as illustrated in FIGS. 18 and 19, the planetary gear shaft 232a and the planetary gear 203a is moved in the direction X, i.e., radially outwardly, and the holding member 500B is moved in the opposite direction Y.

Thus, the planetary gear 203a is moved radially outwardly, so that the external teeth 31a of the first planetary gear 203a are pressed against the first internal teeth 212a of the first gear section 212 and the second internal teeth 222a of the second gear section 222.

Further, as mentioned above, each of the second planetary gear 203b and the third planetary gear 203c is held relatively non-movably with respect to the holding member 500B, at a position on a side opposite to the first planetary gear 203a across the plane n perpendicular to the long axis m. Thus, the second and third planetary gears 203b, 203c are moved integrally together with the holding member 500B, in the direction Y, i.e., radially outwardly. This allows the external teeth 31a of the second planetary gear 203b and the external teeth 31a of the third planetary gear 203c to be also pressed against the first internal teeth 212a of the first gear section 212 and the second internal teeth 222a of the second gear section 222.

In this way, in the reclining device 200 according to the second embodiment, according to rotation of the planetary gear shaft 232a of the first planetary gear 203a, the external teeth 31a of the planetary gears 203a to 203c are pressed against the internal teeth 212a, 222a of the first and second gear sections 212, 222, thereby suppressing the occurrence of backlash therebetween to suppress wobbling of the seat back 102 with respect to the seat cushion 101.

As above, the seat adjustment device 200 according to the second embodiment is configured to set the center O11 of the head 235a of the planetary gear shaft 232a of the first planetary gear 203a to become positionally different from the rotational center O10, and form a part of the outer peripheral edge of the head 235a such that a distance from the rotational center O10 gradually increases along the circumferential direction, and the part of the outer peripheral edge is contactable with the outer peripheral surface of the protruding segment 255. Then, according to rotational operation of the head 235a, the first planetary gear 203a and the holding member 500B are pressed in respective opposite directions, so that the planetary gears 203a to 203c is moved radially outwardly, and thereby the external teeth 31a of the planetary gears 203a to 203c are pressed against the internal teeth 212a, 222a of the first and second gear sections 212, 222. This makes it possible to suppress the occurrence of backlash between respective ones of the external teeth 31a of the planetary gears 203a to 203c and the internal teeth 212a, 222a of the first and second gear sections 212, 222, through a relatively simple operation of rotating the head 235a.

In the second embodiment, the planetary gear body 231a to 231c and the planetary gear shaft 232a to 232c may be integrally formed. However, when the planetary gear body 231a to 231c and the planetary gear shaft 232a to 232c are formed as separate components as in the second embodiment, it becomes possible to readily construct a mechanism for rotationally operating each of the head 235a to 235c of a planetary gear shaft 232a to 232c, thereby obtaining a desired effect.

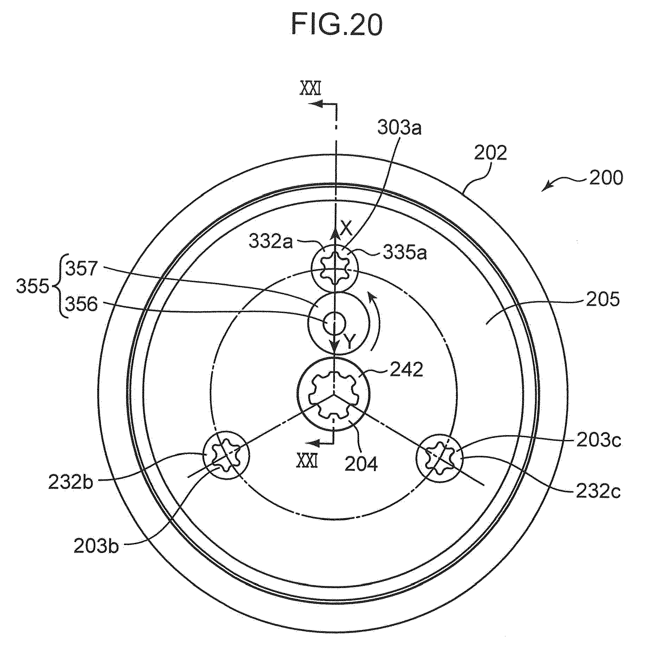

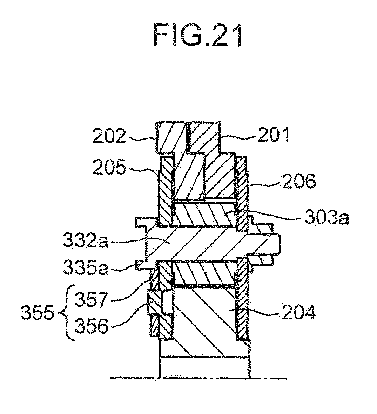

Further, in place of the above configuration in which the central axis O11 of the head 235a, the first planetary gear 203a is offset from the rotational center O10, a configuration illustrated in FIGS. 20 and 21 may be employed. Specifically, in this modified embodiment, a protruding segment 355 has a circular columnar shape, and comprises a non-movable protruding segment body 356, and an eccentric head (pressing member) 357 provided on an outer periphery of the protruding segment body 356. The eccentric head 357 is rotatably fitted on the protruding segment body 356. The protruding segment 355 and the protruding segment body 356 are eccentrically arranged, and the eccentric head 357 is rotatable about a central axis of the protruding segment body 356, instead of a central axis of the protruding segment 355. In this modified embodiment, a center of a head 335a of a planetary gear shaft 332a of a first planetary gear 303a and a rotational center of the planetary gear shaft 332a are not eccentrically arranged, and each head of all planetary gear shafts is configured to be rotated about its own central axis.

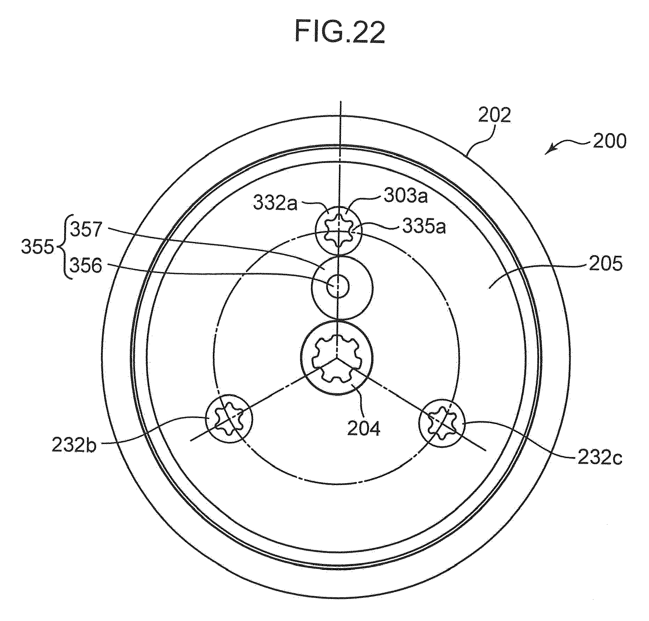

In this modified embodiment, when the eccentric head 357 is rotationally operated in a given direction (in FIGS. 20 and 22, in a clockwise direction) from a state in which the head 335a of the first planetary gear 303a and the eccentric head 357 are not in contact with each other, as illustrated FIG. 22, an outer peripheral edge of the eccentric head 357 is brought into contact with the head 335a of the planetary gear shaft 332a of the first planetary gear 303a. Thus, when the eccentric head 357 is further rotationally operated in the given direction, each of the planetary gears 303a, 203b, 203c is operationally pressed radially outwardly, so that external teeth of the planetary gears 303a, 203b, 203c are pressed against internal teeth of first and second gear sections. In the modified embodiment illustrated in FIG. 20, the first planetary gear 303a is pressed in the direction X, and the remaining planetary gears 203b, 203c are pressed in the direction Y.

In this modified embodiment, the center of the head 335a of the planetary gear shaft 332a of the first planetary gear 303a and the rotational center of the planetary gear shaft 332a may be eccentrically arranged.

Furthermore, the reclining device may be configured to, after the head of the planetary gear shaft of the first planetary gear is rotationally operated through the engagement tool, maintain the head in the rotationally-operated state by biasing means or the like.

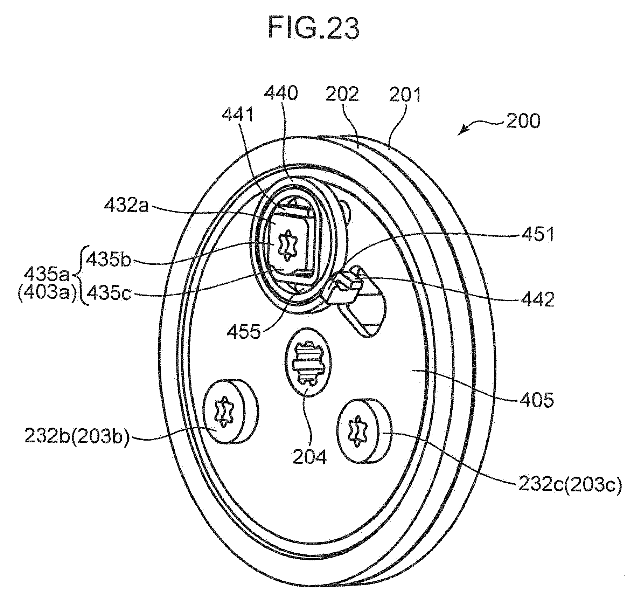

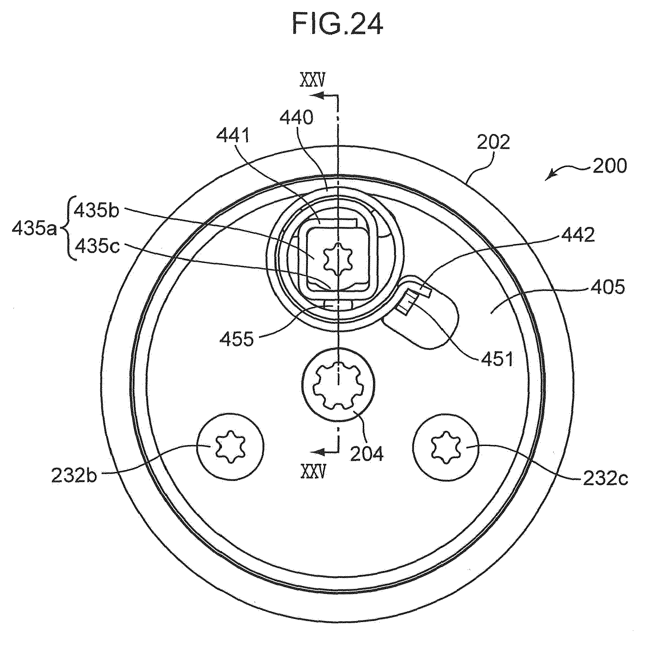

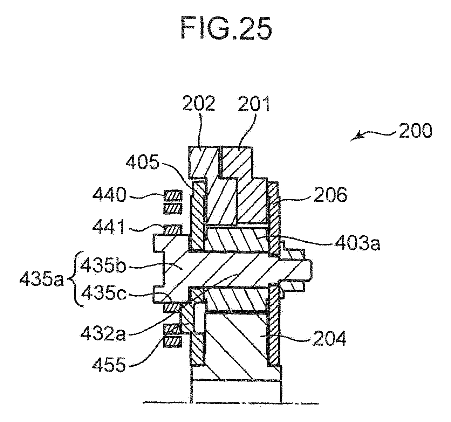

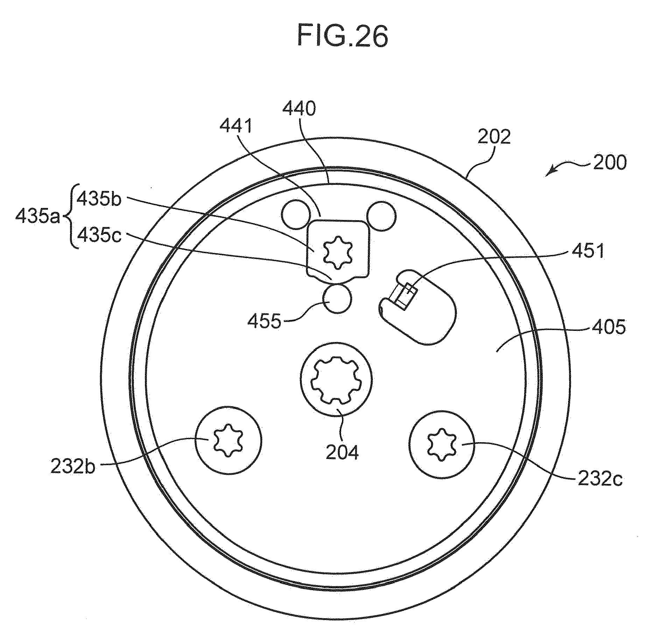

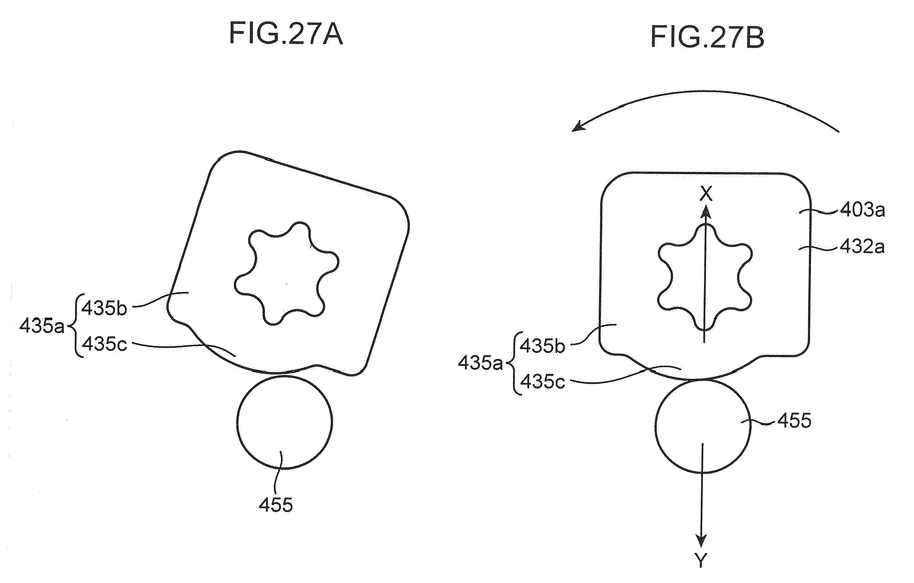

For example, a modified embodiment is illustrated in FIGS. 23 to 27. In this modified embodiment, a head 435a of a planetary gear shaft 432a of a first planetary gear 403a comprises an approximately rectangular-shaped head body 435b, and a protruding segment contact portion 435c. The protruding segment contact portion 435c is provided on the side of a protruding segment 455 to protrude from one side surface of the head body 435b. The protruding segment contact portion 435c is formed such that a distance between an outer peripheral edge thereof and a rotational center of the head 435a gradually increases and then gradually decreases, along a circumferential direction. The outer peripheral edge of the protruding segment contact portion 435c functions as a diametrally enlarged portion which is contactable with the protruding segment 455 and formed such that a distance from the rotational center of the head 435a gradually increases along the circumferential direction. In this modified embodiment, when the head 435a is rotationally operated by the engagement tool, in a given direction (in FIGS. 27B, in a counter-clockwise direction) from a state in which the outer peripheral edge of the head 435a of the first planetary gear 403a and the protruding segment 455 are not in contact with each other, as illustrated FIG. 27A, an outer peripheral edge of the protruding segment contact portion 435c is brought into contact with the protruding segment 455, so that a group of the head 435a and the first planetary gear 403a, and a group of a holding member 500A and second and third planetary gears 203b, 203c, are pressed in respective opposite directions, i.e., the planetary gears 403a, 203b, 203c are pressed radially outwardly.

In this modified embodiment, a spiral-shaped clamping spring 440 is provided as the biasing means. The clamping spring 440 has a head locking portion 441 provided at an inner end thereof. The clamping spring 440 also has a holding member locking portion 442 provided at an outer end thereof. In a state in which the protruding segment contact portion 435c and the protruding segment 455 are in contact with, and the planetary gears 403a, 203b, 203c are pressed radially outwardly, the holding member locking portion 442 of the clamping spring 440 is locked to a locking segment 451 provided on a first holding member 405, and the head locking portion 441 is locked to the head body 435b.

Thus, based on a biasing force of the clamping spring 440, the protruding segment contact portion 435c is maintained in a contact state with the protruding segment 455. In this manner, the planetary gears 403a, 203b, 203c are maintained in the state in which they are pressed radially outwardly, and external teeth of the planetary gears 403a, 203b, 203c are maintained in the state in which they are pressed against internal teeth of first and second gear sections.

In this connection, means to maintain a contact state between the protruding segment contact portion 435c and the protruding segment 455 is not limited to a biasing member, such as the clamping spring. For example, the protruding segment contact portion 435c and the protruding segment 455 may be fixed in a contact state therebetween, by using welding or an adhesive.

Although the above embodiments have been described based on an example where the seat adjustment device of the present invention is applied to a seat reclining device, the seat adjustment device of the present invention may also be applied, for example, to a lifter for raising and lowering a seat such as an automobile seat, in addition to such a reclining device.

As mentioned above, the present invention provides a seat adjustment device comprising: a first plate provided with a first gear section having a plurality of internal teeth; a second plate provided with a second gear section and rotatable with respect to the first plate, wherein the second gear section has a plurality of internal teeth and disposed in concentric relation to the first gear section; a plurality of planetary gears arranged radially inward of the first and second gear sections in side-by-side relation to each other in a circumferential direction of the first and second gear sections, wherein each of the planetary gears having a plurality of external teeth meshable with the internal teeth of the first gear section and the internal teeth of the second gear section; a holding member holding the planetary gears; and a pressing member, wherein: the holding member holds at least one of the planetary gears relatively movably with respect to the holding member in a radial direction of the first and second gear sections, while holding the one or more remaining planetary gears relatively non-movably with respect to the holding member in the radial direction of the first and second gear sections; the at least one planetary gear relatively movable with respect to the holding member and each of the one or more remaining planetary gears relatively non-movable with respect to the holding member are located on respective opposite sides across a plane extending along a rotational central axis of the first and second gear sections; and the pressing member presses the at least one planetary gear relatively movable with respect to the holding member and the holding member, in respective opposite directions along the radial direction of the first and second gear sections, in such a manner as to allow the at least one planetary gear to be moved outwardly in the radial direction of the first and second gear sections.

In this seat adjustment device, the pressing member presses the at least one planetary gear held relatively movably in the radial direction of the first and second gear sections, radially outwardly. Thus, the at least one planetary gear is moved radially outwardly, so that the external teeth of the at least one planetary gear can be pressed against the internal teeth of the first and second gear sections. The pressing member also presses the holding member in a direction opposite to a direction of the movement of the at least one planetary gear. Thus, each of the remaining planetary gears held relatively non-movably with respect to the holding member can also be pressed radially outwardly, so that the external teeth of each of the remaining planetary gears can also be pressed against the internal teeth of the first and second gear sections. This more reliably suppresses wobbling between the internal teeth of the first and second gear sections of the first and second plates, and the external teeth of each of the planetary gears.

Preferably, in the above seat adjustment device, the at least one planetary gear relatively movable with respect to the holding member comprises a planetary gear shaft extending in a given direction, and the holding member has a planetary gear insertion portion allowing the planetary gear shaft to be penetratingly inserted thereinto, and wherein the planetary shaft has a head protruding outwardly from a surface of the holding member when the planetary shaft is penetratingly inserted into the planetary gear insertion portion, and the pressing member is fixed to the surface of the holding member at a position inward of the head in the radial direction of the first and second gear sections, and wherein; one of the head and the pressing member is rotatable about a given rotational central axis; at least a part of an outer peripheral edge of the one of the head and the pressing member rotatable about the given rotational central axis has a diametrically enlarged portion which is contactable with an outer peripheral edge of the remaining one of them and formed such that a distance from the rotational central axis gradually increases along the circumferential direction; and the one of the head and the pressing member is configured to be rotated about the given rotational central axis in such a manner as to allow a contact position of the diametrically enlarged portion with the outer peripheral edge of the remaining one of them to be changed along the circumferential direction.

According to this feature, it becomes possible to, through a simple operation of rotationally operating one of the head and the pressing member, operationally press the planetary gears and the holding member in respective opposite directions along the radial direction of the first and second gear sections.

Preferably, in the above seat adjustment device, the at least one planetary gear relatively movable with respect to the holding member comprises a planetary gear body having the plurality of external teeth, wherein the planetary gear body is a separate component from the planetary gear shaft and rotatably supported by the planetary gear shaft, and wherein the head has the diametrically enlarged portion and rotatable about the rotational central axis.

According to this feature, it becomes possible to, through a simple operation of rotationally operating the head of the at least one planetary gear, readily rotate the head without rotating the planetary gear body, to operationally press the planetary gears and the holding member in respective opposite directions second gear sections.

Preferably, the above seat adjustment device comprises a sun gear provided in a region surrounded by the planetary gears and having a plurality of external teeth meshable with the external teeth of the planetary gears, wherein the holding member holds the sun gear relatively movably with respect to the holding member in the radial direction of the first and second gear sections, and the pressing member biases the sun gear and the holding member in respective opposite directions, whereby the at least one planetary gear relatively movable with respect to the holding member is pressed outwardly in the radial direction of the first and second gear sections through the sun gear.

According to this feature, the pressing member presses the sun gear. Thus, the planetary gear meshed with the sun gear is pressed radially outwardly, and the planetary gear held by the holding member relatively non-movably with respect thereto the holding member in the radial direction is pressed radially outwardly. Thus, according to this feature, based on a simple configuration in which the pressing member applies a biasing force to the sun gear and the holding member, it becomes possible to simultaneously press the external teeth of the planetary gears against the internal teeth of the first and second gears.

For example, this configuration may be embodied as follows: the sun gear comprises a sun gear shaft extending in a given direction, and the at least one planetary gear relatively movable with respect to the holding member comprises a planetary gear shaft extending in a given direction, and wherein the holding member has: a sun gear shaft holding portion holding the sun gear shaft relatively movably with respect to the holding member in the radial direction of the first and second gear sections; a planetary gear shaft holding portion holding the planetary gear shaft relatively movably with respect to the holding member in the radial direction of the first and second gear sections; and a biasing member locking portion formed on a side opposite to the planetary gear shaft holding portion with respect to the sun gear shaft holding portion in the radial direction of the first and second gear sections, and the pressing member is disposed between the sun gear shaft held by the sun gear shaft holding portion and the biasing member locking portion, thereby pressing the biasing member locking portion and the sun gear shaft to respective opposite sides in the radial direction of the first and second gear sections.

## Claims

1. A seat adjustment device (10/200) comprising:
a first plate (1/201) provided with a first gear section (12/212) having a plurality of internal teeth (12a/212a);
a second plate (2/202) provided with a second gear section (22/222) and rotatable with respect to the first plate (1/202), the second gear section (22) having a plurality of internal teeth (22a/222a) and disposed in concentric relation to the first gear section (12/212);
a plurality of planetary gears (3a to 3c/203a to 203c) arranged radially inward of the first and second gear sections (12, 22/212, 222) in side-by-side relation to each other in a circumferential direction of the first and second gear sections (12, 22/212, 222), each of the planetary gears (3a to 3c/203a to 203c) having a plurality of external teeth (31a) meshable with the internal teeth (12a/212a) of the first gear section (12/212) and the internal teeth (22a/222a) of the second gear section (22/222);
a holding member (500A/500B) holding the planetary gears (3a to 3c/203a to 203c); and
a pressing member (8/255),
wherein:
the holding member (500A/500B) holds at least one (3a/203a) of the planetary gears (3a to 3c/203a to 203c) relatively movably with respect to the holding member (500A/500B) in a radial direction of the first and second gear sections (12, 22/212, 222), while holding the one or more remaining planetary gears (3b, 3c/203b, 203c) relatively non-movably with respect to the holding member (500A/500B) in the radial direction of the first and second gear sections (12, 22/212, 222);
the at least one planetary gear (3a/203a) relatively movable with respect to the holding member (500A/500B) and each of the one or more remaining planetary gears (3b, 3c/203b, 203c) relatively non-movable with respect to the holding member (500A/500B) are located on respective opposite sides across a plane (n) extending along a rotational central axis (O1) of the first and second gear sections (12, 22/212, 222); and
the pressing member (8/255) presses the at least one planetary gear (3a/203a) relatively movable with respect to the holding member (500A/500B) and the holding member (500A/500B), in respective opposite directions along the radial direction of the first and second gear sections (12, 22/212, 222), in such a manner as to allow the at least one planetary gear (3a/203a) to be moved outwardly in the radial direction of the first and second gear sections (12, 22/212, 222).

2. The seat adjustment device as defined in claim 1, wherein
the at least one planetary gear (203a) relatively movable with respect to the holding member (500B) comprises a planetary gear shaft (232a) extending in a given direction, and
the holding member (500B) has a planetary gear insertion portion (251a, 261a) allowing planetary gear shaft (232a) to be penetratingly inserted thereinto,
and wherein
the planetary shaft (232a) has a head (235a) protruding outwardly from a surface of the holding member (500B) when the planetary shaft (232a) is penetratingly inserted into the planetary gear insertion portion (251a, 261a), and
the pressing member (255) is fixed to the surface of the holding member (500B) at a position inward of the head (235a) in the radial direction of the first and second gear sections (12, 22/212, 222),
and wherein:
one of the head (235a) and the pressing member (255) is rotatable about a given rotational central axis (O10);
at least a part of an outer peripheral edge of the one of the head (235a) and the pressing member (255) rotatable about the given rotational central axis (O10) has a diametrically enlarged portion which is contactable with an outer peripheral edge of the remaining one of them and formed such that a distance from the rotational central axis (O10) gradually increases along the circumferential direction; and
the one of the head (235a) and the pressing member (255) is configured to be rotated about the given rotational central axis (O10) in such a manner as to allow a contact position of the diametrically enlarged portion with the outer peripheral edge of the remaining one of them to be changed along the circumferential direction.

3. The seat adjustment device as defined in claim 2, wherein the at least one planetary gear (203a) relatively movable with respect to the holding member (500B) comprises a planetary gear body (231a) having the plurality of external teeth (31a), the planetary gear body (231a) being a separate component from the planetary gear shaft (232a) and rotatably supported by the planetary gear shaft (232a), and wherein the head (235a) has the diametrically enlarged portion (236b) and rotatable about the rotational central axis (O10).

4. The seat adjustment device as defined in claim 1, which comprises a sun gear (4) provided in a region surrounded by the planetary gears (3a to 3c) and having a plurality of external teeth (41a) meshable with the external teeth (31a) of the planetary gears (3a to 3c), wherein
the holding member (500A) holds the sun gear (4) relatively movably with respect to the holding member (500A) in the radial direction of the first and second gear sections (12, 22), and
the pressing member (8) biases the sun gear (4) and the holding member (500A) in respective opposite directions, whereby the at least one planetary gear (3a) relatively movable with respect to the holding member (500A) is pressed outwardly in the radial direction of the first and second gear sections (12, 22) through the sun gear (4).

5. The seat adjustment device as defined in claim 4, wherein
the sun gear (4) comprises a sun gear shaft (43) extending in a given direction, and
the at least one planetary gear (3a) relatively movable with respect to the holding member (500A) comprises a planetary gear shaft (32) extending in a given direction,
and wherein
the holding member (500A) has: a sun gear shaft holding portion (54, 64) holding the sun gear shaft (43) relatively movably with respect to the holding member (500A) in the radial direction of the first and second gear sections (12, 22); a planetary gear shaft holding portion (51a, 61a) holding the planetary gear shaft (32) relatively movably with respect to the holding member (500A) in the radial direction of the first and second gear sections (12, 22); and a biasing member locking portion (53) formed on a side opposite to the planetary gear shaft holding portion (51a, 61a) with respect to the sun gear shaft holding portion (54, 64) in the radial direction of the first and second gear sections (12, 22), and
the pressing member (8) is disposed between the sun gear shaft (43) held by the sun gear shaft holding portion (54, 64) and the biasing member locking portion (53), thereby pressing the biasing member locking portion (53) and the sun gear shaft (43) to respective opposite sides in the radial direction of the first and second gear sections (12, 22).
